# EUROPÄISCHE PATENTSCHRIFT

(11) **EP 1 162 712 B1**
(45) Veröffentlichungstag und Bekanntmachung des Hinweises auf die Patenterteilung: **24.10.2012**
(21) Anmeldenummer: 01113154.7
(22) Anmeldetag: 30.05.2001
(51) Int. Cl.: H02J 7/14

(54) **Energieversorgungsystem für ein Kraftfahrzeug mit einem Niedrigspannungsbordnetz und mit einem Höherspannungsbordnetz**
Power supply system for a vehicle with a low voltage distribution network and a high voltage distribution network
Système d'alimentation pour un véhicule avec un réseau de distribution de bord à tension basse et un réseau de distribution de bord à tension élevée

(30) Priorität: 10.06.2000 DE 10028748
(43) Veröffentlichungstag der Anmeldung: 12.12.2001
(73) Patentinhaber: Bayerische Motoren Werke Aktiengesellschaft, 80809 München (DE)
(72) Erfinder: Pfab, Xaver, 84424 Isen (DE); Schumann, Anton, 80992 München (DE); Kapfhammer, Karl, 82110 Germering (DE); Grom, Alfred, 85625 Glonn (DE)

(56) Entgegenhaltungen:
- WO-A-98/19890
- DE-A1- 4 435 726
- DE-A1- 19 604 736
- JP-A- 9 163 597
- US-A- 5 164 655
- WITEHIRA P: "INTERLLIGENT AUTOMOTIVE BATTERY SYSTEMS" JOURNAL OF POWER SOURCES, ELSEVIER SEQUOIA S.A. LAUSANNE, CH, Bd. 42, Nr. 1/2, 29. Januar 1993 (1993-01-29), Seiten 195-209, XP000409225 ISSN: 0378-7753

## Beschreibung

Die Erfindung bezieht sich auf ein Energieversorgungsystem für ein Kraftfahrzeug mit einem Niedrigspannungsbordnetz und mit einem Höherspannungsbordnetz.

Ein derartiges Energieversorgungssystem ist beispielsweise aus der DE 197 24 356 C1 bekannt. Hierbei entspricht die Spannungsversorgung mit 12 V bzw. mit 14 V für Niederspannungsverbraucher dem Niedrigspannungsbordnetz und die Spannungsversorgung mit 36 V bzw. mit 42 V für Hochleistungsverbraucher dem Höherspannungsbordnetz. Bei einem derartigen Energieversorgungssystem erzeugt ein Generator üblicherweise die erforderliche Spannung für das Höherspannungsbordnetz. Die Spannung für das Niedrigspannungsbordnetz wird beispielsweise durch einen DC/DC-Wandler erzeugt. Insbesondere die Beleuchtung und die elektronischen Steuergeräte sind Teil des Niedrigspannungsbordnetzes. Bei derartigen Energieversorgungssystemen, auch Mehrspannungsbordnetze genannt, würde ein Kurzschluß zwischen dem Niedrigspannungsbordnetz und dem Höherspannungsbordnetz zum Ansteigen der Spannung auf dem Niedrigspannungsbordnetz in der Weise führen, daß die Verbraucher des Niedrigspannungsbordnetzes beschädigt oder zerstört werden könnten. Weiterhin ist bekannt, daß bei derartigen Mehrspannungsbordnetzen in erhöhtem Maße elektromagnetisch verursachte Störungen auftreten.

Aus der DE 44 35 726 A1 ist ein Energieversorgungssystem für ein Kraftfahrzeug mit einem Bordnetz bekannt, bei dem die Verbraucher über eine einen steuerbaren Schalter aufweisende zentrale Sammelleitung angeschlossen sind. Zwischen dem auf der Plusleitung fließenden Strom und dem auf der Minusleitung fließenden Strom wird ein ggf. auftretender Differenzstrom gemessen. Der steuerbare Schalter wird geöffnet, wenn der Differenzstrom einen vorbestimmten Schwellenwert überschreitet.

Die DE 196 04 736 A1 beschreibt eine Einrichtung zur Stromversorgung von busvernetzten Steuergeräten und Verbrauchern in einem Kraftfahrzeug, wobei ein weckbares Steuergerät dauerstromversorgt an einer zentralen, mit der Fahrzeugbatterie dauernd verbundenen Bordnetzklemme liegt. Eine Überspannungsschutzeinrichtung zum Schutz des Bordnetzes vor Überspannungen öffnet einen Bordnetzschutzschalter, falls ein Überspannungswert erfasst wird.

Aus der DE 197 10 073 A1 ist eine Überspannungsschutzvorrichtung zum Schutz eines von einem elektrischen Generator gespeisten Bordnetzes und daran angeschlossener elektrischer Einrichtungen bekannt. An der Ausgangsseite des Generators parallel zum Bordnetz ist eine Einheit zur Regelung der Bordnetzspannung auf einen zulässigen Wert vorgesehen.

Die Aufgabe der Erfindung besteht insbesondere in der Bereitstellung eines Energieversorgungssystems für ein Kraftfahrzeug in Form eines Mehrspannungsbordnetzes, das gegen Kurzschlüsse zwischen den Bordnetzen gesi chert ist. Diese Aufgabe wird durch die Merkmale der unabhängigen Patentansprüche jeweils gelöst.

Erfindungsgemäß wird entweder mittels einer Spannungsmessung am Niedrigspannungsbordnetz oder durch eine Differenzstrommessung im Höherspannungsbordnetz überprüft, ob ein Kurzschluß zwischen dem Niedrigspannungsnetz und dem Höherspannungsbordnetz auftritt. Unter dem Begriff Kurzschluß wird ein geschlossener Stromkreis in der Weise verstanden, daß an den dem Niedrigspannungsbordnetz zugeordneten Verbrauchem, die Spannung des Höherspannungsbordnetzes anliegt. Für einen derartigen Kurzschluß sind zwei Verbindungen zwischen den beiden Bordnetzen erforderlich, erstens eine Verbindung der Plusanschlüsse und zweitens eine Verbindung der Minusanschlüsse der beiden Bordnetze.

In einer ersten Alternative wird ein Kurzschluß erkannt, wenn die Spannung des Niedrigspannungsbordnetzes einen Wert überschreitet, der über dem üblichen Spannungswert des Niedrigspannungsbordnetzes liegt. In einer zweiten Alternative wird ein Kurzschluß erkannt, wenn ein Differenzstrom zwischen dem auf der Plusleitung fließenden Strom und dem auf der Minusleitung fließenden Strom im Höherspannungsbordnetz vorliegt; denn im fehlerfreien Normalfall müssen die Ströme auf der Plusleitung und der Minusleitung gleich groß sein. Jede Abweichung weist auf einen auf nicht regulären Pfaden fließenden Strom und damit einen möglichen Leitungsschluß zwischen dem Niedrigspannungsbordnetz und dem Höherspannungsbordnetz hin. Um die Sicherheit der richtigen Fehlererkennung zu erhöhen, können die erste und die zweite Alternative auch miteinander kombiniert werden.

Wesentlicher Bestandteil der Erfindung ist auch, daß die Komponenten des Höherspannungsbordnetzes entweder im Hinblick auf ihren Minusanschluß oder im Hinblick auf ihren Plusanschluß über nur eine zentrale Sammelleitung mit dem Minusanschluß oder mit dem Plusanschluß des Niedrigspannungsbordnetzes verbunden sind. Diese Maßnahme hat sich als besonders vorteilhaft im Hinblick auf die elektromagnetische Verträglichkeit herausgestellt. Somit ist im Hinblick auf einen Anschluß, vorzugsweise den Minusanschluß, bereits absichtlich eine erste für einen Kurzschluß notwendige Verbindung zwischen dem Niedrigspannungsbordnetz und dem Höherspannungsbordnetz vorgesehen, die jedoch noch zu keinem geschlossenen Stromkreis in der Weise führt, daß die Spannung des Höherspannungsbordnetzes an den Verbrauchern des Niedrigspannungsbordnetzes anliegt. Für einen (totalen) Kurzschluß muß noch eine zweite Verbindung zwischen den jeweils anderen Anschlüssen (also bei einer vorzugsweise absichtlichen Verbindung der Minusanschlüsse auch zwischen den Plusanschlüssen) des Niedrigspannungsbordnetzes und des Höherspannungsbordnetzes vorliegen. Bei Auftreten eines derartigen (totalen) Kurzschlusses durch einen Fehler wird erfindungsgemäß die zuvor absichtlich vorgesehene erste Verbindung durch einen in der Sammelleitung vorgesehenen steuerbaren Schalter getrennt. Somit können die Auswirkungen eines Kurzschlusses wirksam vermieden werden.

Durch die Erfindung wird einerseits die elektromagnetische Verträglichkeit eines Energieversorgungssystems in Form eines Mehrspannungsbordnetzes erhöht und andererseits die Gefahr der Auswirkungen eines Kurzschlusses zwischen den beiden Bordnetzen unterschiedlicher Spannung reduziert. Besonders vorteilhaft ist bei einem derartigen Mehrspannungsbordnetz die Verwendung eines nicht-potentialgetrennten DC/DC-Wandlers, bei dem üblicherweise ohnehin bereits die Minus- oder Masseanschlüsse der unterschiedlichen Bordnetze durchverbunden sind. Diese Verbindungsleitung der Minus- oder Masseanschlüsse kann gleichzeitig als zentrale Sammelleitung verwendet werden. Erfindungsgemäß muß der DC/DC-Wandler jedoch im Hinblick auf den steuerbaren Schalter in der Sammelleitung modifiziert werden. Hierdurch wird eine besonders einfache Möglichkeit für die zentrale Abschaltbarkeit im Kurzschluß-Fall geschaffen.

In der Zeichnung ist ein Ausführungsbeispiel der Erfindung dargestellt. Es zeigt
- Fig. 1: ein erfindungsgemäßes Energieversorgungssystem mit einer Spannungsüberwachung des Niedrigspannungsbordnetzes zur Erkennung des Kurzschlusses,
- Fig. 2: ein erfindungsgemäßes Energieversorgungssystem mit einer Differenzstrommessung im Höherspannungsbordnetz zur Erkennung des Kurzschlusses sowie
- Fig. 3: und
- Fig. 4: mögliche Ausführungen einer Vorrichtung zur Differenzstrommessung.

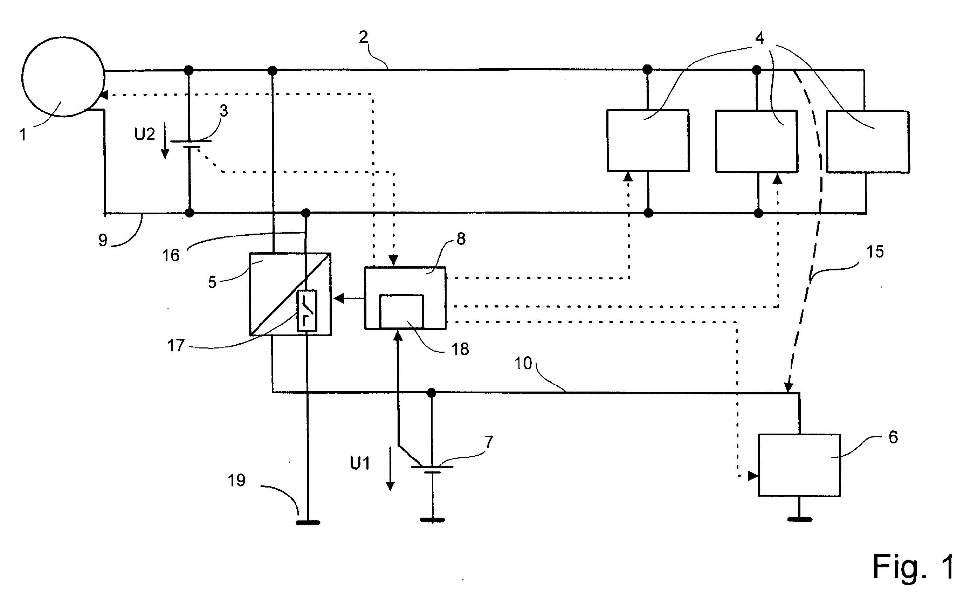

In Fig. 1 ist ein Energieversorgungssystem in Form eines Zweispannungs-Bordnetzes dargestellt. Das Zweispannungsbordnetz besteht aus einem Niedrigspannungsbordnetz, z.B. von 14 Volt und aus einem Höherspannungsbordnetz, z.B. von 42 Volt. Das Höherspannungsbordnetz besteht aus einem Generator 1, einem Energiespeicher 3 und elektrischen Hochleistungsverbrauchern 4, wie z. B. elektromagnetische Ventilsteuerungs-Aktuatoren. Der Generator 1 erzeugt 42 Volt. Damit werden die Hochleistungsverbraucher 4 versorgt. Zur Pufferung der elektrischen Energie ist beispielsweise der Energiespeicher 3 als 36 Volt-Batterie ausgestaltet. Die Minusanschlüsse der Komponenten des Höherspannungsbordnetzes, insbesondere der Hochleistungsverbraucher 4, sind über die Leitung 9 miteinander verbunden. Die Plusanschlüsse der Komponenten des Höherspannungsbordnetzes sind über die Leitung 2 miteinander verbunden. Das Höherspannungsbordnetz 1, 2, 3, 4, 9 ist über einen DC/DC-Wandler 5 mit dem Niedrigspannungsbordnetz verbunden. Das Niedrigspannungsbordnetz besteht insbesondere aus einem Energiespeicher 7 und aus Niederleistungsverbrauchern 6, wie z.B. die Fahrzeugbeleuchtung und die elektronischen Steuergeräte. Der Energiespeicher 7 ist beispielsweise eine 12 Volt-Batterie.

Die Masseanschlüsse bzw. Minusanschlüsse der Komponenten des Niedrigspannungsbordnetzes können in üblicher Weise jeweils mit der Fahrzeugmasse verbunden sein. Im Unterschied hierzu sind die Minusanschlüsse der Komponenten 1, 3 und 4 des Höherspannungsbordnetzes zusammengefaßt und über eine zentrale Sammelleitung 16, die durch den hier nicht-potentialgetrennten DC/DC-Wandler durchgeschleift ist, mit dem Masseanschluß 19 durchverbunden. Der Masseanschluß 19 ist auch den Masseanschlüssen der Komponenten 7, 6 des Niedrigspannungsbordnetzes zugeordnet.

Im DC/DC-Wandler 5 ist ein steuerbarer Schalter 17 integriert, durch den die zentrale Sammelleitung 16 bedarfsweise unterbrochen werden kann. Der DC/DC-Wandler 5 kann beispielsweise selbst die Spannung U1 des Niedrigspannungsbordnetzes messen und bei Überschreiten einer vorgegebenen Spannungsschwelle den steuerbaren Schalter 17 öffnen.

Alternativ kann jedoch auch ein Batteriemanagementsteuergerät 18 vorgesehen sein, das Teil des Niedrigspannungsbordnetzes sein kann. Ein derartiges Batteriemanagementsteuergerät 18 überwacht z. B. den Ladezustand, die Spannung U1 und die Temperatur der 12 Volt-Batterie 7 und gibt dem DC/DC-Wandler 5 die für den momentanen Zustand geeignete Ladespannung als Sollwert vor. Auch kann das Batteriemanagementsteuergerät 18 die Spannung U1 überwachen und bei Überschreiten einer vorgegebenen Spannungsschwelle dem Wandler 5 einen Befehl zum Öffnen des steuerbaren Schalters 17 übermitteln. Zusätzlich oder alternativ kann auch ein Bordnetzmanagementsteuergerät 8 vorgesehen sein, das die jeweilige Auslastung des Bordnetzes überwacht und bei längerem Ladebilanzdefizit Maßnahmen gegen eine drohende Batterie-Tiefentladung ergreift. Auch ein derartiges Bordnetzmanagementsteuergerät 8 kann zur Erkennung des Anstieges der Spannung U1 im Niedrigspannungsbordnetz herangezogen werden. Das Batteriemanagementsteuergerät 18 kann auch im Bordnetzmanagementsteuergerät 8 integriert sein.

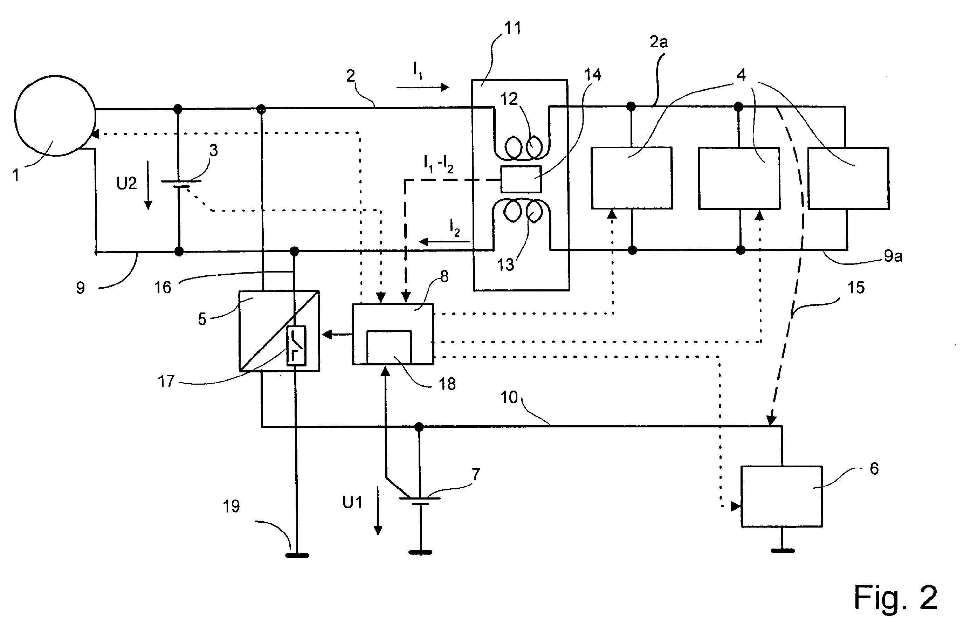

Fig. 2 zeigt ein Energieversorgungssystem gemäß Fig. 1, erweitert um eine Differenzstrommeßvorrichtung 11. Im übrigen sind gleiche Teile mit gleichen Bezugszeichen versehen. In Fig. 2 werden nach dem an sich bekannten Verfahren der Fehlerstromschutzschalter (auch als FI bezeichnet) der vom Generator 1 und der Batterie 3 ausgehende Strom I₁ auf der Plusleitung 2 bzw. 2a und der zum Generator 1 bzw. zur Batterie 3 zurückkehrende Strom I₂ auf der Minusleitung 9 bzw. 9a gemessen und miteinander verglichen. Beide Stromwerte I₁ und I₂ müssen im Normalfall gleich groß sein. Übersteigt der gemessene Differenzstrom (I₁ - I₂) eine vorgegebene Stromschwelle, wird Kurzschluß zwischen der Plusleitung 2 bzw. 2a des Höherspannungsbordnetzes und der Plusleitung 10 des Niedrigspannungsbordnetzes erkannt. Die Differenzstrommeßvorrichtung 11 besteht im Wesentlichen aus einer auf dem "Hinweg" in der Plusleitung 2 liegenden Spule 12, aus einer auf dem "Rückweg" in der Minusleitung 9 liegenden Spule 13 sowie aus einer Meßeinrichtung 14. Wenn von der Meßeinrichtung 14 erkannt wird, dass der Differenzstrom (I₁ - I₂) eine vorgegebene Stromschwelle überschritten hat, sendet sie ein entsprechendes Signal, ggf. über das Steuergerät 8 oder 18, zum DC/DC-Wandler 5, der daraufhin den steuerbaren Schalter 17 öffnet.

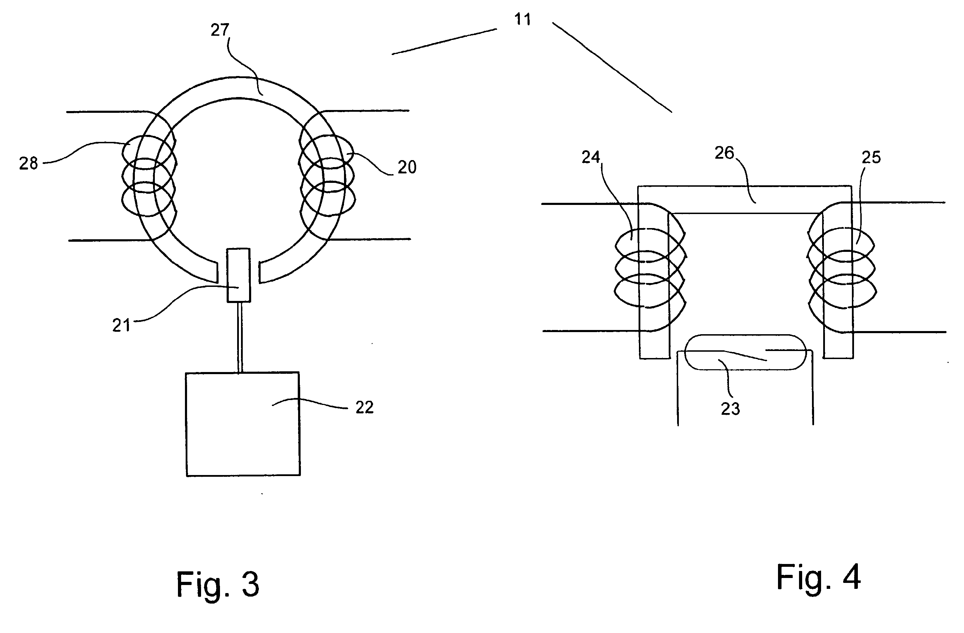

Lediglich ergänzend werden die Details möglicher Differenzstrommeßvorrichtungen 11 in den Figuren 3 und 4 dargestellt. In Fig. 3 werden nach dem bekannten Verfahren zwei auf einen Eisenkern 27 gewickelte, von den zu messenden Strömen gegensinnig durchflossene Spulen 20 und 28 genutzt. Das im Eisenkern entstehende Differenzmagnetfeld wird - wie von Stromsensoren her bekannt - durch einen Magnetfeldsensor 21 (z.B. ein Hallsensor oder ein magnetoresistives Bauteil) gemessen und durch eine Elektronik 22 ausgewertet; d. h. mit einem vorgegebenen Sollwert verglichen. Alternativ wird in Fig. 4 ein Reedkontakt 23 benutzt, der von zwei gegensinnig stromdurchflossenen Spulen 24 und 25 umgeben ist. Der Reedkontakt 23 schaltet, wenn das Differenzmagnetfeld die Ansprechschwelle des Reedkontakts übersteigt. Zur Verbesserung des magnetischen Flusses kann auch zusätzlich ein Eisenkern 26 verwendet werden. Sobald der Magnetfeldsensor 21 nach Fig. 3 ein Signal liefert, das größer als ein einstellbarer Schwellwert ist oder sobald der Reedkontakt 23 nach Fig. 4 schaltet, wird auf einen Leitungsschluß 15 (vgl. Fig. 2) geschlossen.

Wesentlich für das erfindungsgemäße Energieversorgungssystem ist, daß die einzelnen Hochleistungsverbraucher 4 des Höherspannungsbordnetzes nicht, wie bei Niedrigspannungsbordnetzen üblich, mit einem Anschluß auf Karrosseriemasse gelegt sind. Sie müssen vielmehr eine eigene, die Minusanschlüsse zusammenfassende Rückleitung in Form der zentralen Sammelleitung 16 aufweisen und nur über diese zentral, aber trennbar auf das Massepotential 19 geführt werden.

Ein Fehlerstrom, der aufgrund eines Leitungsschlusses 15 seinen Weg in das Niedrigspannungsbordnetz gefunden hat, kann als solcher detektiert werden, weil er seinen "Rückweg" nicht über die Minusleitung 9 bzw. 9a zum Generator 1 bzw. zur Batterie 3 nimmt, sondern durch die Verbraucher 6 des Niedrigspannungsbordnetzes zur Masse fließt und damit die zweite Meßstelle an der Spule 13 umgeht.

Da die Minusleitung 9a bzw. 9 nur über das Leitungsstück 16 mit dem Massepotential 19 verbunden ist, kann jeder Fehlerstrom nur diesen Weg gehen. Er muß immer durch das Leitungsstück 16 und kann erfindungsgemäß durch den steuerbaren Schalter 17 dort abgeschaltet werden. Deshalb ist diese einzige Verbindung zur Masse ein wesentliches Erfindungsmerkmal.

Alternativ kann der steuerbare Schalter 17 auch außerhalb des Wandlers 5 in einem separaten Gerät vorgesehen sein. Jedoch ist eine Integration des steuerbaren Schalters in ein ohnehin vorhandenes Gerät, wie z.B. den Wandler 5 oder die Steuergeräte 8 oder 18, einem separaten Gerät vorzuziehen.

Ergänzend wird darauf hingewiesen, daß ein Leitungsschluß zwischen der Plusleitung 2 des Höherspannungsbordnetzes und der Fahrzeugmasse 19 ebenfalls einen Fehlerstrom über den Pfad 19, 16 zur Folge hat, wobei jedoch die Verbraucher 6 des Niedrigspannungsbordnetzes umgangen werden. Für diesen Fall kann eine Sicherungseinrichtung z. B. eine Schmelzsicherung zum Abschalten des Kurzschlusses führen. Auch ein (zusätzlicher) Leitungsschluß zwischen der Minusleitung 9 bzw. 9a und der Fahrzeugmasse 19 ist über die Differenzstrommeßvorrichtung 11 detektierbar. Lediglich ein Kurzschluß zwischen der Plusleitung 2 und der Minusleitung 9 im Höherspannungsbordnetz ist nicht detektierbar, wofür jedoch ebenfalls eine Schmelzsicherung als Schutzorgan vorgesehen werden kann.

Ergänzend wird darauf hingewiesen, daß ein erfindungsgemäßes Energieversorgungssystem beispielsweise auch dann vorliegt, wenn kein Wandler 5 sondern beispielsweise zwei Generatoren, also je ein Generator für jedes Bordnetz, vorgesehen sind. Hierbei können beispielsweise die Minusanschlüsse oder die Plusanschlüsse der beiden Generatoren aus bauraumsparenden Gründen zusammengefaßt werden. In diesem Fall ist die Verbindungsleitung zwischen den zusammengefaßten Anschlüssen als zentrale Sammelleitung auszubilden, in der ein steuerbarer Schalter integriert werden muß.

Erfindungswesentlich ist, daß zum Schutz der Verbraucher des Niedrigspannungsbordnetzes absichtliche Verbindungen zwischen den unterschiedlichen Bordnetzen steuerbar aufgetrennt werden können.

## Patentansprüche

1. Kraftfahrzeugenergieversorgungssystem mit einem Niedrigspannungsbordnetz (6, 7, 10) und mit einem Höherspannungsbordnetz (1, 2, 3, 4, 9),
**dadurch gekennzeichnet,**
- **dass** der Minusanschluss (9) zumindest der Hochleistungsverbraucher (4) des Höherspannungsbordnetzes einzig über eine zentrale Sammelleitung (16) jeweils mit dem Minusanschluss (19) des Niedrigspannungsbordnetzes verbunden sind, wobei die zentrale Sammelleitung (16) einen steuerbaren Schalter (17) aufweiset,
- **dass** der Minusanschluss des Niedrigspannungsbordnetzes mit der Fahrzeugmasse verbunden ist, und
- **dass** Mittel (8; 18) zur Messung der Spannung (U1) des Niedrigspannungsbordnetzes vorgesehen sind, bei dem der steuerbare Schalter (17) geöffnet wird, wenn die Spannung (U1) des Niedrigspannungsbordnetzes eine vorgegebene Spannungsschwelle überschritten hat.

2. Kraftfahrzeugenergieversorgungssystem mit einem Niedrigspannungsbordnetz (6, 7, 10) und mit einem Höherspannungsbordnetz (1, 2, 3, 4, 9a, 11),
**dadurch gekennzeichnet,**
- **dass** der Minusanschluss (9a) zumindest der Hochleistungsverbraucher (4) des Höherspannungsbordnetzes einzig über eine zentrale Sammelleitung (16) jeweils mit dem Minusanschluss (19) des Niedrigspannungsbordnetzes verbunden sind, wobei die zentrale Sammelleitung (16) einen steuerbaren Schalter (17) aufweist,
- **dass** der Minusanschluss des Niedrigspannungsbordnetzes mit der Fahrzeugmasse verbunden ist, und
- Mittel (11,12,13,14) zur Messung des Differenzstromes zwischen dem auf der Plusleitung (2, 2a) des Hochleistungsverbrauchers fließenden Strom (I₁) und dem auf der Minusleitung (9, 9a) fließenden Strom (I₂) im Höherspannungsbordnetz vorgesehen sind und bei dem der steuerbare Schalter (17) geöffnet wird, wenn dieser Differenzstrom (I₁-I₂) eine vorgegebene Stromschwelle überschritten hat.

## Claims

1. A power supply system for a motor vehicle with a low-voltage onboard power supply (6, 7, 10) and with a higher-voltage onboard power supply (1, 2, 3, 4, 9), **characterised In that**
- the minus connection (9) at least of the high-power loads (4) of the higher-voltage onboard power supply is only connected by a central bus line (16), in each case, to the minus connection (19) of the low-voltage onboard power supply, the central bus line (16) having a controllable switch (17),
- **in that** the minus connection of the low-voltage onboard power supply is connected to the vehicle earth, and
- **in that** means (8; 18) are provided to measure the voltage (U1) of the low-voltage onboard power supply, in which the controllable switch (17) is opened when the voltage (U1) of the low-voltage onboard power supply has exceeded a predetermined voltage threshold.

2. A power supply system for a motor vehicle with a low-voltage onboard power supply (6, 7, 10) and with a higher-voltage onboard power supply (1, 2, 3, 4, 9a, 11), **characterised in that**
- the minus connection (9a) at least of the high-power loads (4) of the higher-voltage onboard power supply is only connected by a central bus line (16), in each case, to the minus connection (19) of the low-voltage onboard power supply, the central bus line (16) having a controllable switch (17),
- **in that** the minus connection of the low-voltage onboard power supply is connected to the vehicle earth, and
- means (11, 12, 13, 14) are provided to measure the differential current between the current (I₁) flowing on the plus line (2, 2a) of the high-power load and the current (I₂) flowing on the minus line (9, 9a) in the higher-voltage onboard power supply and in which the controllable switch (17) is opened when this differential current (I₁-I₂) has exceeded a predetermined current threshold,

## Revendications

1. Système d'alimentation en énergie d'un véhicule automobile équipé d'un réseau embarqué basse tension (6, 7, 10) et d'un réseau embarqué haute tension (1, 2, 3, 4, 9),
système **caractérisé en ce que**
- la borne négative (9) d'au moins un consommateur de forte puissance (4) du réseau embarqué haute tension est reliée uniquement par l'intermédiaire d'une ligne collectrice centrale (16) chaque fois à la borne négative (19) du réseau embarqué basse tension,
* la ligne collectrice centrale (16) ayant un commutateur commandé (17),
- la borne négative du réseau embarqué basse tension est reliée à la masse du véhicule, et
- des moyens (8, 18) mesurent la tension (U1) du réseau embarqué basse tension dont le commutateur commandé (17) est ouvert lorsque la tension (U1) du réseau embarqué basse tension dépasse un seuil de tension prédéfini.

2. Système d'alimentation en énergie d'un véhicule automobile équipé d'un réseau embarqué basse tension (6, 7, 10) et d'un réseau embarqué haute tension (1, 2, 3, 4, 9a, 11),
**caractérisé en ce que**
- la borne négative (9a) d'au moins un utilisateur de forte puissance (4) du réseau embarqué haute tension est uniquement reliée par d'une ligne collectrice centrale (16) à la borne négative (19) du réseau embarqué basse tension,
* la ligne collectrice centrale (16) ayant un premier commutateur commandé (17),
- la borne négative du réseau embarqué basse tension est reliée à la masse du véhicule, et
- des moyens (11, 12, 13, 14) mesurent la différence d'intensité entre le courant (I₁) passant par la ligne positive (2, 2a) de l'utilisateur de forte puissance et le courant (I₂) passant dans la ligne négative (9, 9a) du réseau embarqué haute tension et dont le commutateur commandé (17) commande est ouvert si la différence d'intensité (I₁-I₂) dépasse un seuil d'intensité prédéfini.
